# EUROPEAN PATENT SPECIFICATION

(11) **EP 1 471 274 B1**
(45) Date of publication and mention of the grant of the patent: **09.08.2006**
(21) Application number: 04013816.6
(22) Date of filing: 11.04.1998
(51) Int. Cl.: F16C 33/10

(54) **Closed type thrust dynamic pressure bearing with through hole**
Geschlossenes dynamisches Drucklager mit Durchgangsöffnung
Palier de butée dynamique du type fermé avec trou traversant

(43) Date of publication of application: 27.10.2004
(62) Divisional of application: 98106699.6
(73) Proprietor: JTEKT Corporation, Osaka-shi Osaka 542-8502 (JP)
(72) Inventor: Takahashi, Takeshi, Kashiba-shi Nara-ken (JP)
(74) Representative: Selting, Günther

(56) References cited:
- GB-A- 1 222 275
- US-A- 5 407 281
- US-A- 5 433 529
- US-A- 5 536 088
- US-A- 5 559 382
- US-A- 5 658 080

## Description

### BACKGROUND OF THE INVENTION

The present invention relates to a closed type thrust dynamic pressure bearing.

There has been available hitherto a closed type thrust dynamic pressure bearing which comprises a rotating member consisting of a shaft body and a flange provided at one end of the shaft body, and a housing for housing the flange of the rotating member in a closed state, where dynamic pressure generating grooves are formed at both axial end faces of the flange.

In this conventional closed type thrust dynamic pressure bearing, when the rotating member is installed vertically, the rotating member lowers due to gravity before activation so that the lower end face of the flange and the receiving surface of the housing opposite to the lower end face of the flange are brought into a contact state or into a state that only an extremely thin membrane of working fluid is present therebetween. In this state, with the rotating member activated, for example, V-shaped dynamic pressure generating grooves try to pull in the working fluid toward a radial center of these grooves simultaneously in both axial end faces of the flange. However, because the housing has the flange housed therein in a closed state, a negative pressure is generated between the upper end face of the flange and the housing, making it impossible to introduce the working fluid sufficiently to a place, particularly a radially inner portion, between the receiving surface of the housing and the lower end face of the flange where only a small amount of working fluid is present originally, as a problem. On this account, at the time of activation of the rotating member, there would arise a state that the working fluid is insufficient between the lower end face of the flange and the receiving surface. As a result, enough dynamic pressure for bearing the flange could not be generated, disabling the thrust dynamic pressure bearing from fulfilling the function as a thrust dynamic pressure bearing, and damaging the end face of the flange, as another problem.

A closed type thrust dynamic pressure bearing according to the first part of claim 1 is disclosed in US 5,559,382. This bearing comprises a shaft body provided at one end with a flange. The flange has an annular region provided with dynamic pressure generating grooves on both end faces. Radially inside of said annular regions, holes are provided which extend through the thickness of the flange. A concave surface is provided radially inside the annular region on each end face of the flange. The axial holes extending through the flange open into the concave surfaces on both ends of the flange.

### SUMMARY OF THE INVENTION

It is an object of the present invention to provide a closed type thrust dynamic pressure bearing which is capable of generating enough dynamic pressure for axially bearing the flange at a start-up of activation, which never damages the end face or the like.

The closed type thrust dynamic pressure bearing of the present invention is defined by claim 1. Accordingly, it is characterized in that one end of the hole opens on the concave surface while the other end of the hole opens on a face having the same height as that of the annular region of the outer end face of the flange from which the shaft body extends.

The present invention provides a closed type thrust dynamic pressure bearing according to claim 1.

According to the closed type thrust dynamic pressure bearing of the present invention, when the rotating member rotates in the state where the shaft body of the rotating member is vertical, the working fluid placed between the upper end face of the flange and the receiving surface of the housing passes through the holes passing through the flange so as to be supplied to between the lower end face of the flange and the receiving surface of the housing, so that enough working fluid can be supplied to the dynamic pressure generating grooves. Therefore, enough dynamic pressure to effect the axial bearing of the flange is generated, allowing the thrust dynamic pressure bearing to fulfill the function as a thrust dynamic pressure bearing, and eliminating the possibility of damage at the lower end face of the flange and the receiving surface of the housing opposite thereto.

In an embodiment, a total sum of cross-sectional areas of the hole or holes is at least 1/30 of an area of the annular region.

In the closed type thrust dynamic pressure bearing of this embodiment, the total sum of cross-sectional area of the holes is at least 1/30 of the annular region, so that enough working fluid is supplied to the lower end face of the flange at a specified rotating speed, allowing enough dynamic pressure to be generated. This fact was verified by experiment.

In an embodiment, an oil sump is provided at the receiving surface of the housing or at the end face of the flange in such a way that the oil sump is at least partly opposed to or overlapped with the annular region.

According to the closed type thrust dynamic pressure bearing of this embodiment, because an oil sump is provided at the receiving surface of the housing or at the end face of the flange so that the oil sump is at least partly opposed to or overlapped with the annular region, the supply of the working fluid to the lower end face of the flange at the activation of the rotating member is done also from this oil sump. This allows the generation of dynamic pressure by the dynamic pressure generating grooves to be achieved more reliably.

### BRIEF DESCRIPTION OF THE DRAWINGS

The present invention will become more fully understood from the detailed description given hereinbelow and the accompanying drawings which are given by way of illustration only, and thus are not limitative of the present invention, and wherein:
Fig. 1A is a sectional view of a dynamic pressure bearing according to an embodiment of the present invention;
Fig. 1B is a plan view of the upper end face of a flange; and
Fig. 2 shows a floating amount of a rotating member versus the ratio of a total area of holes to an annular region.

### DETAILED DESCRIPTION OF THE PREFERRED EMBODIMENTS

Hereinbelow, the present invention is described in detail by an embodiment thereof illustrated in the accompanying drawings.

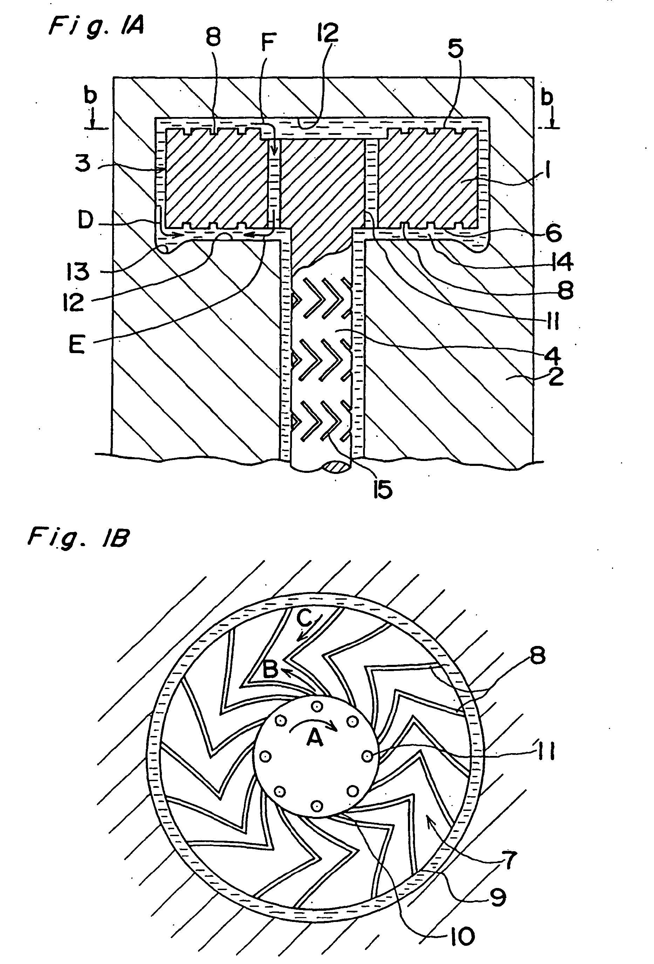

Fig. 1A is a sectional view of an embodiment of the present invention.

As shown in Fig. 1A, a rotating member 3 is comprised of a shaft body 4 and a flange 1 fixed to its one end. The shaft body 4 and the flange 1 are supported radially and axially by the housing 2. The flange 1 is housed in the housing 2 in a closed state. At both upper and lower end faces 5, 6 of the flange 1, are provided V-shaped dynamic pressure generating grooves 8 in an annular region 7 as shown in Figs. 1A, 1B. This annular region 7 is a region between a circle 9 and a circle 10 in Fig. 1B.

Radially inside the annular region 7 of the flange 1, eight through holes 11 are provided equidistantly on a circumference. The total sum of the cross-sectional areas of these through holes 11 is not less than 1/30 of the area of the annular region.

On the other hand, at a receiving surface 12 opposite to the lower end face 6 of the flange 1, are provided a plurality of oil sumps 13 partly opposed to the annular region 7. These oil sumps 13 are curved smoothly at their radial inside so that a working fluid 14 easily goes out toward the dynamic pressure generating grooves 8.

Meanwhile, dynamic pressure generating grooves 15 are provided on the shaft body 4 so that the shaft body 4 is radially supported by dynamic pressure.

When the closed type thrust dynamic pressure bearing of the above construction has the rotating member 3 installed vertically, the flange 1 lowers due to its dead weight before start-up, so that the lower end face 6 of the flange 1 and the receiving surface of the housing 2 opposite to the lower end face 6 of the flange 1 are brought into a contact state or into a state that only an extremely thin membrane of the working fluid 14 is present therebetween. In this state, with the rotating member 3 activated, the V-shaped dynamic pressure generating grooves 8 try to pull in the working fluid 14 toward a radial center of these grooves 8. When this occurs, a space formed between the upper end face 5 of the flange 1 and the receiving surface 12 of the housing 2 and a space formed between the lower end face 6 of the flange 1 and the receiving surface 12 of the housing 2 are communicated with each other by the holes 11 drilled through the flange 1 radially inside the annular region 7. Therefore, the working fluid 14 flows through the holes 11 as shown by arrows E, F in Fig. 1A so that the working fluid 14 is supplied to between the lower end face 6 of the flange 1 and the receiving surface 12 of the housing 2. As a result, even if the housing 2 has housed the flange 1 in a closed state, negative pressure is not generated between the upper end face 5 of the flange 1 and the housing 2. Thus, between the receiving surface 12 of the housing 2 and the lower end face 6 of the flange 1, the working fluid 14 can be sufficiently supplied particularly to radially inside part as shown by arrows D, E, F so that dynamic pressure can be generated from the beginning of activation.

As shown above, when the rotating member 3 is started up, the working fluid 14 is sufficiently supplied to the annular region 7 of the lower end face 6 of the flange 1 so that enough dynamic pressure to axially support the flange 1 can be generated to the annular region 7 where the dynamic pressure generating grooves 8 are provided. Thus, the closed type thrust dynamic pressure bearing is enabled to fulfill the function as a thrust dynamic pressure bearing.

Also, the dynamic pressure generating grooves 8 of the flange 1 pull in the working fluid 14 from the oil sumps 13. That is, the dynamic pressure generating grooves 8 pull in the working fluid 14 from the oil sumps 13 located immediately under the dynamic pressure generating grooves 8 during the rotation of the flange 1. Therefore, the working fluid 14 is even more easily supplied to between the lower end face 6 of the flange 1 and the receiving surface 12 of the housing 2, as compared with the case where no oil sumps 13 are provided.

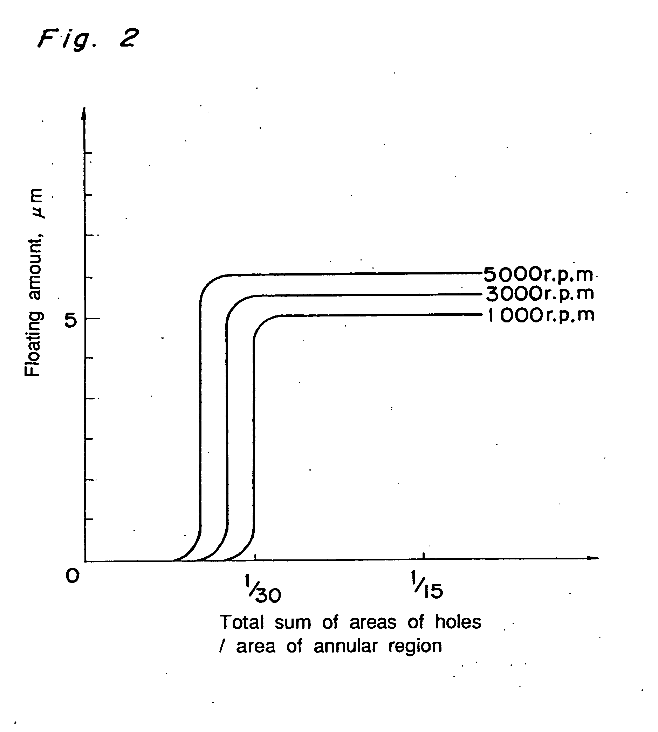

Fig. 2 shows the relationship of the floating amount of the rotating member 3 versus the ratio of the total area of all the holes 11 that allow the working fluid 14 to be circulated to the area of the annular region 7. More specifically, Fig. 2 is a view showing the relationship of the floating amount of the rotating member 3 versus the ratio of the total area of all the holes 11 for the working fluid 14 to the area of the annular region 7, in a case where the rotating speed of the rotating member 3 is varied to 1000 r.p.m., 3000 r.p.m. and 5000 r.p.m. Given a 1/30 or more ratio of the total area of the holes 11 to the area of the annular region 7, when the rotating speed of the rotating member 3 had changed to 1000 r.p.m., 3000 r.p.m. and 5000 r.p.m., the floating amount of the rotating member 3 becomes about 5 µm, 5.5 µm and 6 µm, being not less than a set floating amount of 5 µm. Accordingly, if the ratio of the total area of the holes 11 for the working fluid 14 drilled through the flange 1 to the area of the annular region 7 is not less than 1/30 and if the rotating speed of the rotating member 3 is not less than 1000 r.p.m., then the rotating member 3 is enabled to ensure a floating amount not less than the set floating amount of 5 µm.

Although the dynamic pressure generating grooves 8 are provided at the upper and lower end faces 5, 6 of the flange 1 in the above embodiment, the dynamic pressure generating grooves may alternatively be provided at the receiving surface of the housing opposite to the end faces.

Also, the oil sumps, although not shown, may also be provided at end faces of this flange. These oil sumps may be opposed to the annular region where dynamic pressure generating grooves are provided, or partly overlapped with this annular region. Further, although the oil sumps 13 are provided in a plural number at outer peripheral portion of the receiving surface 12 of the housing 2 in the embodiment, they may also be provided at inner peripheral portion of the receiving surface of the housing. The shape of the oil sumps may also be round-hole, circular-arc or ring shaped.

As apparent from the foregoing description, in the dynamic pressure bearing according to claim 1 of the present invention the working fluid can be sufficiently supplied to between the lower end face of the flange and the surface of the housing opposite to the lower end face of the flange, through the hole. Consequently, enough dynamic pressure to effect the axial bearing of the flange can be generated, allowing the thrust dynamic pressure bearing to fulfill the function as a thrust dynamic pressure bearing at start-up, and preventing the end face of the flange and the receiving surface of the housing from damage.

Also, in the dynamic pressure bearing of an embodiment, the total sum of cross-sectional areas of the hole or holes is at least 1/30 of the annular region. Therefore, the working fluid can be sufficiently supplied to between the lower end face of the flange and the receiving surface of the housing opposite thereto so that the set floating amount can be ensured.

Also, in the dynamic pressure bearing of an embodiment, an oil sump is provided at the receiving surface of the housing or at the end face of the flange in such a way that the oil sump is at least partly opposed to or overlapped with the annular region. Therefore, the working fluid can be supplied to between the lower end face of the flange and the receiving surface of the housing opposite to thereto, more reliably.

The invention being thus described, it will be obvious that the same may be varied in many ways within the scope of the following claims.

## Claims

1. A closed type thrust dynamic pressure bearing comprising:
a rotating member (3) which comprises a shaft body (4) and a flange (1) provided at an end of the shaft body (4), and
a housing (2) for housing the flange (1) of the rotating member (3) in a closed state, wherein dynamic pressure generating grooves (8) are formed at at least one end face (5,6) of the flange (1) or at a receiving surface (12) of the housing (2) opposite to the end face (6),
the flange (1) having at least one hole (11) which passes axially through the flange (1) and which is provided radially inside annular regions (7) where the dynamic pressure generating grooves (8) are provided, and
a concave surface provided radially inside the annular region (7) and recessed from the end face (5) of the flange (1) from which the shaft body (4) does not extend,
**characterized in that**
one end of the hole (11) opens on the concave surface while the other end of the hole (11) opens on a face (6) having the same height as that of the annular region (7) of the other end face (6) of the flange (1) from which the shaft body (4) extends.

2. The closed type thrust dynamic pressure bearing according to claim 1, wherein a working fluid (14) is present between the flange (1) and the housing (2) and inside the plurality of the holes (11).

3. The closed type thrust dynamic pressure bearing according to claim 1 or 2, wherein the dynamic pressure generating grooves (8) formed on the flange (1) is in the shape of V.

4. The closed type thrust dynamic pressure bearing according to any one of claims 1 through 3, wherein v-shaped dynamic pressure generating grooves (15) are formed on an outer peripheral surface of the shaft body (4).

5. The closed type thrust dynamic pressure bearing according to any one of claims 1 through 4, wherein a total sum of cross-sectional areas of the hole or holes (11) is at least 1/30 of an area of the annular region (7).

6. The closed type thrust dynamic pressure bearing according to any one of claims 1 through 5, wherein an oil sump (13) is provided at the receiving surface (12) of the housing (2) for the flange (1) or at the end face (6) of the flange (1) in such a way that the oil sump (13) is at least partly opposed to or overlapped with the annular region (7).

## Patentansprüche

1. Geschlossenes dynamisches Drucklager mit:
einem Rotationsteil (3), das einen Wellenkörper (4) und einen an einem Ende des Wellenkörpers (4) vorgesehenen Flansch (1) aufweist, und
einem Gehäuse (2) zum Aufnehmen des Flanschs (1) des Rotationsteils (3) im geschlossenen Zustand, wobei dynamischen Druck erzeugende Rillen (8) in mindestens einer Stirnfläche (5, 6) des Flanschs (1) oder in einer der Stirnfläche (6) gegenüberliegenden Aufnahmefläche (12) des Gehäuses (2) ausgebildet sind,
wobei der Flansch (1) mindestens ein Loch (11) aufweist, das axial durch den Flansch (1) hindurchgeht und das radial innerhalb ringförmiger Bereiche (7) vorgesehen ist, in denen die dynamischen Druck erzeugenden Rillen (8) vorgesehen sind, und
einer konkaven Fläche, die radial innerhalb des ringförmigen Bereichs (7) vorgesehen und aus derjenigen Stirnfläche (5) des Flanschs (1) ausgenommen ist, von welcher der Wellenkörper (4) nicht absteht,
**dadurch gekennzeichnet, dass**
ein Ende des Lochs (11) an der konkaven Fläche mündet, während das andere Ende des Lochs (11) an einer Fläche (6) mündet, welche die gleiche Höhe hat wie der ringförmige Bereich (7) der anderen Stirnfläche (6) des Flanschs (1), von welcher der Wellenkörper (4) absteht.

2. Geschlossenes dynamisches Drucklager nach Anspruch 1, bei dem ein Arbeitsfluid (14) zwischen dem Flansch (1) und dem Gehäuse (2) und in den mehreren Löchern (11) vorhanden ist.

3. Geschlossenes dynamisches Drucklager nach Anspruch 1 oder 2, bei dem die an dem Flansch (1) ausgebildeten dynamischen Druck erzeugenden Rillen (8) V-förmig sind.

4. Geschlossenes dynamisches Drucklager nach einem der Ansprüche 1 bis 3, bei dem V-förmige dynamischen Druck erzeugende Rillen (15) in einer Außenumfangsfläche des Wellenkörpers (4) ausgebildet sind.

5. Geschlossenes dynamisches Drucklager nach einem der Ansprüche 1 bis 4, bei dem die Gesamtsumme der Querschnittsflächen des Lochs oder der Löcher (11) mindestens 1/30 der Fläche des ringförmigen Bereichs (7) beträgt.

6. Geschlossenes dynamisches Drucklager nach einem der Ansprüche 1 bis 5, bei dem ein Ölsumpf (13) an der Aufnahmefläche (12) des Gehäuses (2) für den Flansch (1) oder an der Stirnfläche (6) des Flanschs (1) derart vorgesehen ist, dass der Ölsumpf (13) mindestens teilweise dem ringförmigen Bereich gegenüberliegt oder mit diesem überlappt.

## Revendications

1. Palier de butée dynamique de type fermé comprenant :
un élément rotatif (3) qui comprend un corps d'arbre (4) et un rebord (1) prévu au niveau d'une extrémité dudit corps d'arbre (4), et
un boîtier (2) pour loger le rebord (1) de l'élément rotatif (3) dans un état fermé, dans lequel des rainures de génération de pression dynamique (8) sont formées au niveau d'au moins une face d'extrémité (5, 6) du rebord (1) ou bien au niveau d'une surface de réception (12) du boîtier (2) opposée à la face d'extrémité (6),
le rebord (1) ayant au moins un trou (11) qui passe de manière axiale à travers le rebord (1) et qui est prévu de manière radiale à l'intérieur des régions annulaires (7) où l'on prévoit les rainures de génération de pression dynamique (8), et
une surface concave prévue de manière radiale à l'intérieur de la région annulaire (7) et enfoncée par rapport à la face d'extrémité (5) du rebord (1) à partir de laquelle le corps d'arbre (4) ne s'étend pas,
**caractérisé en ce que** :
une extrémité du trou (11) s'ouvre sur la surface concave alors que l'autre extrémité du trou (11) s'ouvre sur une face (6) ayant la même hauteur que celle de la région annulaire (7) de l'autre face d'extrémité (6) du rebord (1) à partir de laquelle le corps d'arbre (4) s'étend.

2. Palier de butée dynamique de type fermé selon la revendication 1, dans lequel un fluide de travail (14) est présent entre le rebord (1) et le boîtier (2) et à l'intérieur de la pluralité de trous (11).

3. Palier de butée dynamique de type fermé selon la revendication 1 ou 2, dans lequel les rainures de génération de pression dynamique (8) formées sur le rebord (1) sont en forme de V.

4. Palier de butée dynamique de type fermé selon l'une quelconque des revendications 1 à 3, dans lequel les rainures de génération de pression dynamique (15) en forme de V sont formées sur une surface périphérique externe du corps d'arbre (4) .

5. Palier de butée dynamique de type fermé selon l'une quelconque des revendications 1 à 4, dans lequel une somme totale des surfaces transversales du trou ou des trous (11) représente au moins 1/30 d'une surface de la région annulaire (7).

6. Palier de butée dynamique de type fermé selon l'une quelconque des revendications 1 à 5, dans lequel un carter d'huile (13) est prévu au niveau de la surface de réception (12) du boîtier (2) pour le rebord (1) ou bien au niveau de la face d'extrémité (6) du rebord (1) de sorte que le carter d'huile (13) est au moins partiellement opposé à ou bien chevauche avec la région annulaire (7).
